(19) Europäisches Patentamt
European Patent Office
Office européen des brevets

(11) **EP 2 847 456 B1**

(12) **EUROPÄISCHE PATENTSCHRIFT**

(45) Veröffentlichungstag und Bekanntmachung des Hinweises auf die Patenterteilung:
**19.07.2017 Patentblatt 2017/29**

(21) Anmeldenummer: **13719732.3**

(22) Anmeldetag: **23.04.2013**

(51) Int Cl.:
*F02P 3/01* (2006.01)   *F02P 23/04* (2006.01)
*H01T 2/02* (2006.01)   *H01T 13/00* (2006.01)

(86) Internationale Anmeldenummer:
**PCT/EP2013/001210**

(87) Internationale Veröffentlichungsnummer:
**WO 2013/167239 (14.11.2013 Gazette 2013/46)**

(54) **HOCHFREQUENZ-PLASMAZÜNDVORRICHTUNG**

HIGH-FREQUENCY PLASMA IGNITION DEVICE

DISPOSITIF D'ALLUMAGE À PLASMA HAUTE FRÉQUENCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.05.2012 DE 202012004602 U**

(43) Veröffentlichungstag der Anmeldung:
**18.03.2015 Patentblatt 2015/12**

(73) Patentinhaber: **Rosenberger Hochfrequenztechnik GmbH & Co. KG 83413 Fridolfing (DE)**

(72) Erfinder:
• **ARMBRECHT, Gunnar 84453 Mühldorf am Inn (DE)**
• **WOLLITZER, Michael 83413 Fridolfing (DE)**
• **SCHMID, Thomas 83317 Teisendorf (DE)**

(74) Vertreter: **Zeitler Volpert Kandlbinder Patent- und Rechtsanwälte Partnerschaft mbB Herrnstrasse 44 80539 München (DE)**

(56) Entgegenhaltungen:
DE-A1- 2 628 209     DE-A1-102004 058 925
DE-A1-102005 036 968     US-B1- 6 321 733

**Beschreibung**

Die vorliegende Erfindung betrifft eine Hochfrequenz-Plasmazündvorrichtung, insbesondere für eine Brennkraftmaschine, insbesondere zum Zünden eines Kraftstoff-Luft-Gemisches in einem Brennraum einer Brennkraftmaschine, mit einem Serienschwingkreis, welcher eine Induktivität und eine elektrische Kapazität, die in Serie geschaltet sind, aufweist, sowie mit einem Hochfrequenz-Generator mit einem ersten elektrischen Anschluss und einem zweiten elektrischen Anschluss zum resonanten Anregen des Serienschwingkreises, wobei eine erste elektrische Kontaktstelle vorgesehen ist, an der ein Ende der Kapazität und ein Ende der Induktivität elektrisch miteinander verbunden ist, wobei die Kapazität an einem von der ersten Kontaktstelle abgewandten Ende eine zweite elektrische Kontaktstelle aufweist, wobei die Induktivität an einem von der ersten Kontaktstelle abgewandten Ende eine dritte elektrische Kontaktstelle aufweist, wobei eine elektrische Verbindungseinrichtung vorgesehen ist, welche den ersten Anschluss des Hochfrequenz-Generators mit der dritten Kontaktstelle und den zweiten Anschluss des Hochfrequenz-Generators mit der zweiten Kontaktstelle elektrisch derart verbindet, dass ein Ausgangssignal des Hochfrequenz-Generators über die zweite und dritte elektrische Kontaktstelle an dem Serienschwingkreis anliegt, wobei eine erste Elektrode derart angeordnet und ausgebildet ist, dass diese mit der ersten elektrischen Kontaktstelle elektrisch verbunden ist, wobei eine zweite Elektrode derart angeordnet und ausgebildet ist, dass diese mit der zweiten elektrischen Kontaktstelle elektrisch verbunden ist, so dass zwischen einem freien, von der ersten elektrischen Kontaktstelle abgewandten Ende der ersten Elektrode und einem freien, von der zweiten elektrischen Kontaktstelle abgewandten Ende der zweiten Elektrode eine über der Kapazität anliegende elektrische Spannung zum Zünden eines Plasmas zwischen diesen freien Enden der ersten und zweiten Elektrode zur Verfügung steht (Plasma-Zündkreis), gemäß dem Oberbegriff des Anspruchs 1.

So genannte Otto-Brennverfahren mit Direkteinspritzung des Brennstoffes besitzen durch die Möglichkeit eine Schichtladung im Verbrennungsraum darzustellen ein großes Potential hinsichtlich der Verbrauchsreduktion. Das nicht homogene Gemisch im Brennraum stellt jedoch erhöhte Anforderungen an das eingesetzte Zündverfahren hinsichtlich einer zuverlässigen Zündung zum geeigneten Zeitpunkt. Schwankungen jeglicher Art mindern beispielsweise die Qualität der Zündung und somit den Wirkungsgrad des gesamten Motors. Zum einen kann die Lage des zündfähigen Gemisches leicht variieren und zum anderen kann sich der Haken einer Zündkerze störend auf die Gemischbildung auswirken. Hilfreich für ein direkt einspritzendes Brennverfahren ist ein Zündsystem mit einer größeren räumlichen Ausdehnung in den Verbrennungsraum hinein. Hierzu wird in der DE 10 2004 058 925 A1 vorgeschlagen, ein Kraftstoff-Luft-Gemisch in einem Verbrennungsraum einer Brennkraftmaschine mittels eines Plasmas zu zünden. Eine entsprechende Hochfrequenz-Plasmazündvorrichtung umfasst einen Serienschwingkreis mit einer Induktivität und einer Kapazität sowie eine Hochfrequenzquelle zur resonanten Anregung dieses Serienschwingkreises. Die Kapazität ist durch Innen- und Außenleiterelektroden mit dazwischen liegendem Dielektrikum dargestellt. Diese Elektroden reichen mit ihren äußersten Enden mit einem vorgegebenen gegenseitigen Abstand bis in den Verbrennungsraum hinein.

Der Erfindung liegt die Aufgabe zugrunde, eine Hochfrequenz-Plasmazündvorrichtung der o.g. Art dahingehend zu verbessern, dass trotz unterschiedlicher Impedanzen in dem Raum des Plasmas, einerseits vor und andererseits nach dem Zünden des Plasmas, auf einfache Weise ein maximaler Energieeintrag zum Zünden des Plasmas sowie in das gezündete Plasma erzielt wird.

Diese Aufgabe wird erfindungsgemäß durch eine Hochfrequenz-Plasmazündvorrichtung der o.g. Art mit den in Anspruch 1 gekennzeichneten Merkmalen gelöst. Vorteilhafte Ausgestaltungen der Erfindung sind in den weiteren Ansprüchen beschrieben.

Bei einer Hochfrequenz-Plasmazündvorrichtung der o.g. Art ist es erfindungsgemäß vorgesehen, dass eine dritte Elektrode derart angeordnet und ausgebildet ist, dass diese mit der dritten elektrischen Kontaktstelle elektrisch verbunden ist und ein freies, von der dritten elektrischen Kontaktstelle abgewandtes Ende der dritten Elektrode derart angeordnet ist, dass zwischen diesem freien Ende der dritten Elektrode und dem freien Ende der zweiten Elektrode eine über die zweite und dritte elektrische Kontaktstelle anliegende elektrische Spannung zum Aufrechterhalten des Plasmas nach dem Zünden zur Verfügung steht (Plasma-Aufrechterhaltungskreis).

Dies hat den Vorteil, dass nach dem Zünden des Plasmas durch den Plasma-Zündkreis automatisch über die zweite und dritte Elektrode ein Strom zum Aufrechterhalten des gezündeten Plasmas, welches den Serienschwingkreis über die nun niederohmige, parallel geschaltete Strecke zwischen der ersten und zweiten Elektrode "nahezu kurzschließt" oder "überbrückt" (Plasma-Aufrechterhaltungskreis), zur Verfügung steht, wobei gleichzeitig, falls das Plasma zwischen den Elektroden wieder erlischt, automatisch der Serienschwingkreis wieder in Resonanz angeregt wird und eine Zündspannung zwischen der ersten und zweiten Elektrode erzeugt, um das Plasma sofort wieder zu zünden. Auf diese Weise kann ein gezündetes Plasma kontrolliert über eine vorbestimmte Zeitspanne zwischen den Elektroden aufrechterhalten werden, ohne dass hierfür aufwändige Detektormittel für ein gezündetes Plasma sowie eine von dem Detektormittel gesteuerte Umschalteinrichtung zwischen einem Plasma-Zündkreis und einem Plasma-Aufrechterhaltungskreis, wie zum Beispiel aus DE102005036968 vorbekannt, notwendig Eine optimale und verlustfreie Energieübertragung von dem Hochfrequenz-Generator in den Serienschwingkreis erzielt man dadurch, dass die elektrische Verbindungseinrichtung ein Impedanz-Anpassungsnetzwerk derart aufweist, dass eine elektrische Impedanz zwischen dem ersten und zweiten Anschluss des Hochfrequenzgenerators einerseits an eine elektrische Impedanz zwischen der zweiten und dritten elektrischen Kontaktstelle andererseits in beiden Betriebszuständen (vor und nach dem Zünden des Plasmas) angepasst ist.

Eine besonders einfache und gleichzeitig exakte Impedanzanpassung erzielt man dadurch, dass das Anpassnetzwerk eine Induktivität, insbesondere eine Spule, aufweist, die die erste Anschlussstelle des Hochfrequenz-Generators mit der dritten elektrischen Kontaktstelle elektrisch verbindet, sowie eine Kapazität, insbesondere einen Kondensator, aufweist, welcher die erste Anschlussstelle des Hochfrequenz-Generators mit der zweiten Anschlussstelle des Hochfrequenz-Generators elektrisch verbindet.

Einen besonders einfachen mechanischen Aufbau, welcher ggf. in ein isoliertes Kabel integriert werden kann, erzielt man dadurch, dass die Kapazität des Serienschwingkreises durch mindestens einen Kondensator, mindestens einen Plattenkondensator, mindestens einen Kugelkondensator, mindestens einen Zylinderkondensator, mindestens ein Koaxialkabel, mindestens ein Leiterpaar, mindestens einen Durchführungskondensator und/oder durch zwei elektrische Leiter mit vorbestimmten Abstand, vorbestimmter Länge und Dielektrikum zwischen diesen ausgebildet ist.

Einen weiter vereinfachten mechanischen Aufbau, welcher ggf. in ein isoliertes Kabel integriert werden kann, erzielt man dadurch, dass die Induktivität des Serienschwingkreises durch mindestens eine Spule, mindestens eine Ringspule, mindestens eine Zylinderspule, mindestens einen Koaxialleiter, mindestens eine Spule mit Magnetkern, mindestens einen Transformator und/oder mindestens einen elektrischen Leiter ausgebildet ist.

Einen weiterhin vereinfachten mechanischen Aufbau erzielt man dadurch dass die Hochfrequenz-Plasmazündvorrichtung ein Gehäuse aufweist, welches mindestens einen Teil der zweiten Elektrode ausbildet.

Die Erfindung wird im Folgenden anhand der Zeichnung näher erläutert. Diese zeigt in:

Fig. 1 ein elektrisches Schaltbild der erfindungsgemäßen Hochfrequenz-Plasmazündvorrichtung,

Fig. 2 eine erste bevorzugte Ausführungsform einer erfindungsgemäßen Hochfrequenz-Plasmazündvorrichtung in schematischer Darstellung,

Fig. 3 eine zweite bevorzugte Ausführungsform einer erfindungsgemäßen Hochfrequenz-Plasmazündvorrichtung in schematischer Darstellung,

Fig. 4 eine dritte bevorzugte Ausführungsform einer erfindungsgemäßen Hochfrequenz-Plasmazündvorrichtung in schematischer Darstellung,

Fig. 5 eine vierte bevorzugte Ausführungsform einer erfindungsgemäßen Hochfrequenz-Plasmazündvorrichtung in schematischer Darstellung und

Fig. 6 eine fünfte bevorzugte Ausführungsform einer erfindungsgemäßen Hochfrequenz-Plasmazündvorrichtung in schematischer Darstellung.

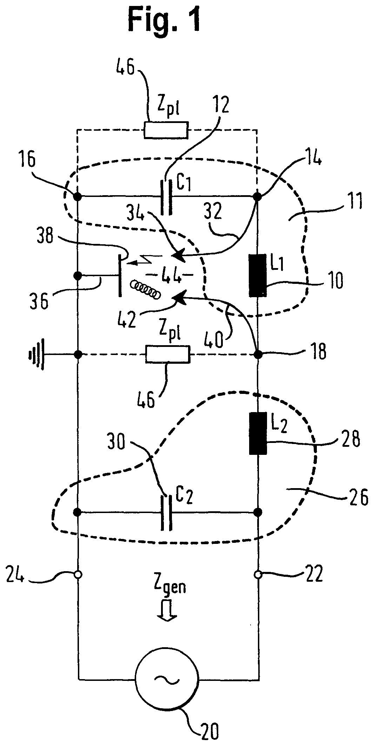

Das grundsätzliche Prinzip und die grundsätzliche Funktionsweise der erfindungsgemäßen Hochfrequenz-Plasmazündvorrichtung wird nachfolgend anhand der Fig. 1 näher erläutert. Fig. 1 veranschaulicht ein elektrisches Ersatzschaltbild der erfindungsgemäßen Hochfrequenz-Plasmazündvorrichtung. Diese umfasst einen Serienschwingkreis 11 mit einer Induktivität 10 (L1) und einer elektrischen Kapazität 12 (C1), die über eine erste elektrische Kontaktstelle 14 zu einem Serienschwingkreis zusammen geschaltet sind. Hierdurch ergibt sich an einem freien, von der ersten elektrischen Kontaktstelle 14 abgewandten Ende der elektrischen Kapazität 12 eine zweite elektrische Kontaktstelle 16 und einem freien, von der ersten elektrischen Kontaktstelle 14 abgewandten Ende der Induktivität 10 eine dritte elektrische Kontaktstelle 18. Es ist weiterhin ein Hochfrequenz-Generator 20 vorgesehen, welcher ein Hochfrequenzsignal als Ausgangssignal mit vorbestimmter Frequenz, Amplitude und Leistung zwischen einem ersten Anschluss 22 und einem zweiten Anschluss 24 erzeugt. Dieses Ausgangssignal entspricht in der Frequenz einer Resonanzfrequenz des Serienschwingkreises 11, welche sich aus den Werten der Induktivität $L_1$ 10 und der Kapazität $C_1$ 12 in bekannter Weise aus der Formel

$$f_{res} = \frac{1}{2\pi\sqrt{L_1 C_1}}$$

ergibt. Auf diese Weise kann der Hochfrequenz-Generator 20 den Serienschwingkreis resonant anregen. Der HF-Generator (20) weist eine Impedanz $Z_{gen}$ auf.

Der Hochfrequenz-Generator 20 ist über eine Verbindungseinrichtung 26 mit dem Serienschwingkreis 11 verbunden, so dass der erste Anschluss 22 des Hochfrequenz-Generators 20 mit der dritten elektrischen Kontaktstelle 18 des Serienschwingkreises und der zweite Anschluss 24 des Hochfrequenz-Generators 20 mit der zweiten elektrischen Kontaktstelle 16 des Serienschwingkreises elektrisch verbunden ist. Die Verbindungseinrichtung 26 hat hierbei die elektrische Funktion, die Ausgangsimpedanz $Z_{gen}$ des Hochfrequenz-Generators 20 über die beiden Anschlüsse 22, 24 an eine elektrische Impedanz über den zweiten und dritten elektrischen Kontakt 16, 18 anzupassen.

Der Begriff "elektrische Impedanz" bzw. "Impedanz" bzw. "Ausgangsimpedanz" bezeichnet hier den Wechselstromwiderstand, welcher einerseits das Verhältnis der Amplituden von sinusförmiger Wechselspannung zu sinusförmigem Wechselstrom und andererseits die Phasenverschiebung zwischen diesen beiden Größen angibt.

Falls die Ausgangsimpedanz des Hochfrequenz-Generators 20 gleich der Impedanz über den zweiten und dritten elektrischen Kontakt 16, 18 ist, so weist die Verbindungseinrichtung 26 lediglich elektrische Leiter auf, die einerseits die erste Anschlussstelle 22 mit der dritten elektrischen Kontaktstelle 18 und andererseits die zweite Anschlussstelle 24 mit der zweiten elektrischen Kontaktstelle 16 jeweils direkt elektrisch verbinden, ohne eine Impedanzanpassung durchzuführten. Es ist jedoch von Vorteil, bereits vorhandene Hochfrequenz-Generatoren zu verwenden. Diese haben beispielsweise eine Ausgangsimpedanz von 50Ω. Demgegenüber liegt über die zweite und dritte elektrische Kontaktstelle 16, 18 typischerweise eine Impedanz von beispielsweise 12Ω vor. In diesem Falle ist eine Impedanzanpassung durch die Verbindungseinrichtung 26 vorgesehen. In der beispielhaft dargestellten Ausführungsform gemäß Fig. 1 weist die Verbindungseinrichtung 26 ein Anpassungsnetzwerk mit einer Anpassungsinduktivität 28 ($L_2$) und einer Anpassungskapazität 30 ($C_2$) auf. Hierbei ist die Anpassungsinduktivität 28 derart angeordnet, dass diese den ersten Anschluss 22 und die dritte elektrische Kontaktstelle 18 elektrisch miteinander verbindet, und die Anpassungskapazität 30 ist derart angeordnet, dass diese die dritte elektrische Kontaktstelle 18 mit der zweiten elektrischen Kontaktstelle 16 elektrisch miteinander verbindet. Dies erzeugt elektrisch eine entsprechende Impedanzanpassung von 50Ω auf 12Ω, wobei hierfür der Wert für die Anpassungskapazität $C_2$ 30 und der Wert für die Anpassungsinduktivität $L_2$ 28 entsprechend der Ausgangsfrequenz des Hochfrequenz-Generators 20 bzw. der Resonanzfrequenz des Serienschwingkreises gewählt sind.

Eine erste Elektrode 32 ist elektrisch mit der ersten elektrischen Kontaktstelle 14 verbunden und ein freies, von der ersten elektrischen Kontaktstelle 14 abgewandtes Ende 34 der ersten Elektrode 32 ragt in einen Raum 44, in dem ein Plasma gezündet und für eine vorbestimmte Zeitspanne aufrechterhalten werden soll. Eine zweite Elektrode 36 ist elektrisch mit der zweiten elektrischen Kontaktstelle 16 verbunden und ein freies, von der zweiten elektrischen Kontaktstelle 16 abgewandtes Ende 38 der zweiten Elektrode 36 ragt in den Raum 44. Eine dritte Elektrode 40 ist elektrisch mit der dritten elektrischen Kontaktstelle 18 verbunden und ein freies, von der dritten elektrischen Kontaktstelle 18 abgewandtes Ende 42 der dritten Elektrode 40 ragt in den Raum 44. Die freien Enden 34, 38 und 42 der Elektroden 32, 36 und 40 sind derart in dem Raum 44 angeordnet, dass sich zwischen diesen Enden 34, 38 und 42 jeweilige elektrische Spannung beim Betrieb der Plasma-Zündvorrichtung ergeben, die einen entsprechenden elektrischen Strom zwischen den Enden 34, 38 und 42 bedingen, wie nachfolgend noch näher erläutert wird.

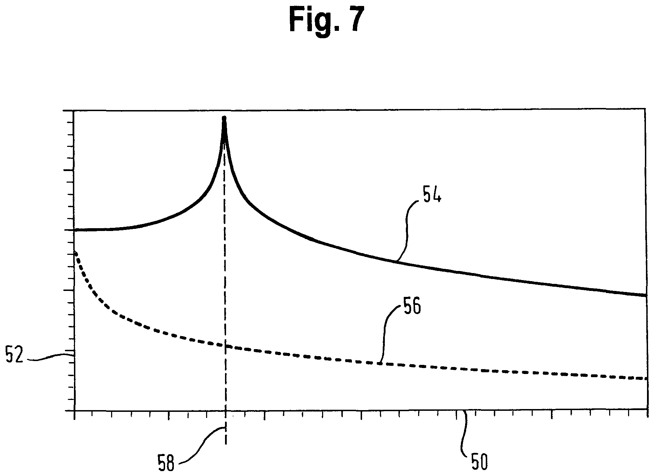

Fig. 7 veranschaulicht grafisch einen Spannungsabfall über den Kondensator C1 12 des Schwingkreises 11 in Abhängigkeit von der Frequenz f, mit der der Schwingkreis durch den Generator 20 angeregt wird. In Fig. 7 ist auf einer horizontalen Achse 50 die Frequenz f, mit der der Schwingkreis durch den Generator 20 angeregt wird, aufgetragen und auf einer vertikalen Achse 52 ist ein Spannungsabfall einer elektrischen Spannung über den Kondensator $C_1$ 12 aufgetragen. Ein erster Graph 54 veranschaulicht den Verlauf des Spannungsabfalls über den Kondensator $C_1$ 12 in Abhängigkeit von der Frequenz f bevor ein Plasma in dem Raum 44 gezündet ist und ein zweiter Graph 56 veranschaulicht den Verlauf des Spannungsabfalls über den Kondensator $C_1$ 12 in Abhängigkeit von der Frequenz f nachdem ein Plasma in dem Raum 44 gezündet ist. Bei der Linie 58 befindet sich die Resonanzfrequenz $f_{res}$ des Schwingkreises 11 und dementsprechend ergibt sich vor dem Zünden des Plasmas eine hoher Spanungsabfall (Graph 54). Nach dem Zünden des Plasmas überbrückt die niedrige Impedanz des Plasmas den Kondensator $C_1$ 12, wie nachfolgend noch näher erläutert wird, so dass es zu keinem erhöhten Spannungsabfall komme (Graph 56).

Zunächst liegt für die elektrische Schaltung ein Zustand ohne gezündetes Plasma in dem Raum 44 zwischen den freien Enden 34, 38 und 42 der Elektroden 32, 36 und 40 vor. Durch die resonante Anregung des Serienschwingkreises 11 mittels des Ausgangssignals des Hochfrequenz-Generators 20 ergibt sich ein hoher Wert für eine elektrische Spannung, welche an beiden Enden der elektrischen Kapazität 12 auftritt, also über die erste und zweite elektrische Kontaktstelle 14, 16 und somit an den freien Enden 34, 38 der ersten und zweiten Elektrode 32, 36 anliegt. Im Resonanzfall (bei f=$f_{res}$; vgl. Fig. 7, Graph 54) wird diese elektrische Spannung groß genug, um ein Plasma zwischen den freien Enden 34, 38 der ersten und zweiten Elektrode 32, 36 zu zünden. Mit anderen Worten, wird die von dem Hochfrequenz-Generator 20 abgegebene elektrische Spannung durch die resonante Anregung des Serienresonanzkreises 11 um einen vorbestimmten Faktor von beispielsweise 100 erhöht. Vor der Zündung des Plasmas im Raum 44 ist der Serienresonanzkreis 11 nur schwach bedämpft. Sobald jedoch das Plasma gezündet ist, ergibt sich elektrisch ein der elektrischen Kapazität 12 parallel geschalteter Widerstand 46, wie in Fig. 1 mit gestrichelter Linie dargestellt, von beispielsweise 12Ω, welcher einer Impedanz $Z_{pl}$ des Plasmas entspricht. Dies führt dazu, dass die elektrische Spannung über den ersten und zweiten elektrischen Kontakt 16, 18 zusammenbricht, der Serienresonanzkreis 11 überbrückt ist und der Großteil der elektrischen Spannung an der Induktivität 10 abfällt. Die elektrische Spannung über der Kapazität 12 bricht ein (vgl. Fig. 7, Graph 56). Es kann somit kein ausreichender elektrischer Strom mehr über einen Spalt zwischen den freien Enden 34, 38 der ersten und zweiten Elektrode 32, 36 zum Aufrechterhalten des Plasmas fließen. Ohne weiter Maßnahmen würde das Plasma im Raum 44 zwischen den freien Enden 34, 38 der ersten und zweiten Elektrode 32, 36 sofort wieder erlöschen.

Erfindungsgemäß ist jedoch die dritte Elektrode 40 vorgesehen. Diese übernimmt unmittelbar nach dem Zünden des Plasmas im Raum 44 den elektrischen Stromfluss über einen Spalt zwischen den freien Enden 38, 42 der zweiten und dritten Elektrode 36, 40, da dieser ebenfalls von dem gezündeten Plasma mit einem Widerstand $Z_{pl}$ von beispielsweise 12Ω überbrückt wird. Das freie Ende 42 der dritten Elektrode 40 ist nämlich derart angeordnet, dass sich das gezündete Plasma zumindest teilweise bis in einen Spalt zwischen den freien Enden 38, 42 der zweiten und dritten Elektrode 36, 40 erstreckt. Da das gezündete Plasma zwischen den freien Enden 38, 42 der zweiten und dritten Elektrode 36, 40 einen Übergang mit einem Widerstand $Z_{pl}$ 46 von ungefähr 12Ω erzeugt, ist für den Hochfrequenz-Generator 20 an der zweiten und dritten Kontaktstelle 16, 18 durch die dritte Elektrode auch nach dem Zünden des Plasmas ein Widerstand bzw. eine Impedanz von 12Ω sichtbar und der Hochfrequenz-Generator 20 bringt weiterhin seine volle elektrische Energie bzw. elektrische Leistung in das Plasma ein. Der einzige Unterschied zum Moment der Zündung besteht darin, dass der elektrische Strom nicht mehr über den Spalt zwischen den freien Enden 34, 38 der ersten und zweiten Elektrode 32, 36 sondern über den Spalt zwischen den freien Enden 38, 42 der zweiten und dritten Elektrode 36, 40 fließt. Die Anordnung der freien Enden 34, 38, 42 ist hierfür derart ausgebildet, dass sich das in dem Spalt zwischen den freien Enden 34, 38 der ersten und zweiten Elektrode 32, 36 gezündete Plasma örtlich zumindest teilweise auch in dem Spalt zwischen den freien Enden 38, 42 der zweiten und dritten Elektrode 36, 40 befindet.

Da der Serienschwingkreis 11 derart ausgebildet ist, dass sich zwischen dem zweiten und dritten elektrischen Kontakt 16, 18 dieselbe Impedanz von hier beispielsweise 12Ω ergibt, bevor das Plasma gezündet ist, ergibt sich für den Hochfrequenz-Generator 20 hinsichtlich der Impedanzanpassung kein Unterschied, ob das Plasma gezündet ist oder nicht. Der Hochfrequenz-Generator 20 kann in beiden Fällen immer seine volle elektrische Leistung ohne Reflexionsverluste einspeisen, einerseits in den Serienschwingkreis 11 vor dem und bis zum Zünden des Plasmas und andererseits in das Plasma zwischen den freien Enden 38, 42 der zweiten und dritten Elektrode 36, 40 nach dem Zünden des Plasmas.

Sollte aufgrund äußerer Einflüsse, beispielsweise aufgrund einer hohen Strömungsgeschwindigkeit eines Mediums, wie beispielsweise eines zündfähigen Gemisches in einem Brennraum eines Arbeitszylinders einer Brennkraftmaschine als Raum 44, das Plasma erlöschen, so wird der Übergang über den Spalt zwischen den freien Enden 38, 42 der zweiten und dritten Elektrode 36, 40 wieder hochohmig und die Bedämpfung des Serienresonanzkreises 11 durch den parallelen Widerstand $Z_{pl}$ 46 entfällt, so dass die Leistung des Hochfrequenz-Generators 20 sofort wieder in den Serienresonanzkreis 11 eingespeist und dieser entsprechend resonant angeregt wird, bis die elektrische Spannung zum Zünden des Plasmas über die elektrische Kapazität $C_1$ 12 wieder erreicht ist und das Plasma, wie zuvor erläutert, gezündet wird. Dementsprechend ist unmittelbar ersichtlich, dass die erfindungsgemäße Plasmazündvorrichtung selbsttätig und ohne zusätzliche Schaltvorrichtungen oder Plasmadetektoren zwischen den Betriebszuständen "Plasma zünden" und "Plasma aufrechterhalten" wechselt, so dass durch einfaches Einspeisen des Ausgangssignals des Hochfrequenz-Generators 20 an die elektrischen Kontakte 16, 18 das Plasma gezündet und aufrechterhalten wird, so lange das Ausgangssignal des Hochfrequenz-Generators 20 entsprechend anliegt. Mit anderen Worten kann also durch einfaches Anlegen bzw. Trennen des Ausgangssignals von dem Hochfrequenz-Generator 20 an die bzw. von den elektrischen Kontakten 16, 18 das Plasma für eine definierte bzw. vorbestimmte Zeitpanne erzeugt und aufrechterhalten werden.

Raum 44 ist beispielsweise ein Brennraum in einem Arbeitszylinder einer Brennkraftmaschine, so dass das Plasma zum Zünden eines Kraftstoff-Luft-Gemisches einer Brennkraftmaschine dient. Dadurch, dass das Plasma für eine beliebige Zeitspanne aufrechterhalten werden kann, wird eine homogenere Verbrennung sowie eine hoch sichere Zündung für das Kraftstoff-Luft-Gemisches erzielt. Dies ist besonders bei Brennkraftmaschinen im Magerbetrieb bzw. Schichtladebetrieb von Vorteil, da in diesen Fällen ein zündfähiges Gemisch nur an einer ganz bestimmten Stelle zu einem ganz bestimmten Zeitpunkt im Brennraum des Arbeitszylinders vorliegt. Dieser Ort und dieser Zeitpunkt kann mit dem gezündeten Plasma sehr genau getroffen werden.

Voranstehend wurde die Erfindung anhand eines Prinzip- bzw. Ersatzschaltbildes gemäß Fig. 1 für die erfindungsgemäße Hochfrequenz-Plasmazündvorrichtung näher erläutert. Nachfolgend werden beispielhafte Ausführungsbeispiele für eine erfindungsgemäße Hochfrequenz-Plasmazündvorrichtung erläutert.

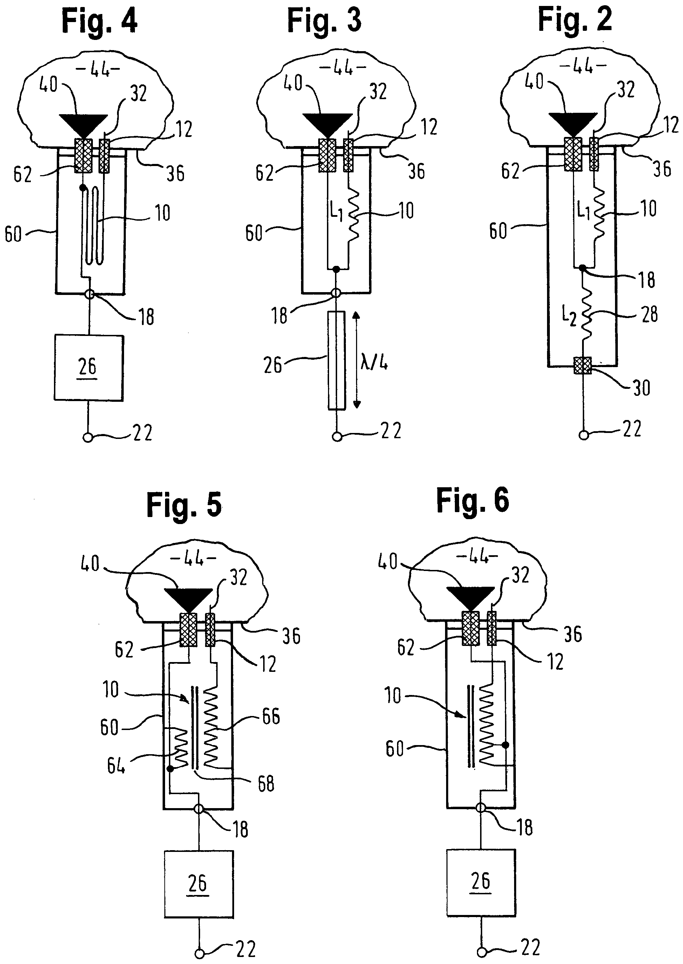

Fig. 2 zeigt eine erste bevorzugte Ausführungsform einer erfindungsgemäßen Hochfrequenz-Plasmazündvorrichtung. Funktionsgleiche Teile sind mit gleichen Bezugszeichen bezeichnet, wie in Fig. 1, so dass zu deren Erläuterung auf die obige Beschreibung der Fig. 1 verwiesen wird. Die Hochfrequenz-Plasmazündvorrichtung gemäß Fig. 2 weist ein Gehäuse 60 auf, welches aus einem elektrisch leitenden Werkstoff ausgebildet ist und somit denjenigen Teil der Vorrichtung gemäß Fig. 1 ausbildet, der mit dem Anschluss 24 des Hochfrequenz-Generators 20 elektrisch verbunden ist. Das Anpassnetzwerk 26 umfasst eine Kapazität $C_2$ 30, die als Durchführungskondensator ausgebildet ist und eine innerhalb des Gehäuses 60 angeordnete Induktivität $L_2$ 28, die als

einfache Spule ausgebildet ist. Der Durchführungskondensator 30 stellt eine elektrische Isolation zum Gehäuse 60 zur Verfügung.

Fig. 3 zeigt eine zweite bevorzugte Ausführungsform einer erfindungsgemäßen Hochfrequenz-Plasmazündvorrichtung. Funktionsgleiche Teile sind mit gleichen Bezugszeichen bezeichnet, wie in Fig. 1 und 2, so dass zu deren Erläuterung auf die obige Beschreibung der Fig. 1 und 2 verwiesen wird. Der Aufbau der Hochfrequenz-Plasmazündvorrichtung entspricht im Wesentlichen demjenigen der ersten bevorzugten Ausführungsform von Fig. 2. Bei der zweiten bevorzugten Ausführungsform gemäß Fig. 3 sind das Anpassnetzwerk 26 als eine A/4-Leitung und die Induktivität $L_1$ 10 als einfache Spule ausgebildet.

Fig. 4 zeigt eine dritte bevorzugte Ausführungsform einer erfindungsgemäßen Hochfrequenz-Plasmazündvorrichtung. Funktionsgleiche Teile sind mit gleichen Bezugszeichen bezeichnet, wie in Fig. 1 bis 3, so dass zu deren Erläuterung auf die obige Beschreibung der Fig. 1 bis 3 verwiesen wird. Die dritte Elektrode 40 ist mittels eines elektrischen Isolators 62 durch das Gehäuse 60 hindurch geführt. Die erste Elektrode 32 ist mittels eines Durchführungskondensators 12 durch das Gehäuse hindurch geführt, welcher einerseits eine elektrische Isolation zwischen der ersten Elektrode 32 und dem Gehäuse 60 zur Verfügung stellt sowie andererseits die Kapazität $C_1$ 12 ausbildet. Die Induktivität $L_1$ 10 ist als eine Umwegleitung ausgebildet.

Fig. 5 zeigt eine vierte bevorzugte Ausführungsform einer erfindungsgemäßen Hochfrequenz-Plasmazündvorrichtung. Funktionsgleiche Teile sind mit gleichen Bezugszeichen bezeichnet, wie in Fig. 1 bis 4, so dass zu deren Erläuterung auf die obige Beschreibung der Fig. 1 bis 4 verwiesen wird. Der Aufbau der Hochfrequenz-Plasmazündvorrichtung entspricht im Wesentlichen demjenigen der ersten bevorzugten Ausführungsform von Fig. 2. Die Induktivität $L_1$ 10 ist als ein Transformator mit Primärwicklung 64, Sekundärwicklung 66 und mit einem Kern 68 aus einem magnetischen Werkstoff ausgebildet. Dieser Transformator führt zusätzlich zu einer Erhöhung der elektrischen Spannung über die Kapazität $C_1$ 12, indem über den Transformator die Spannung entsprechend dem Wicklungsverhältnis von Primärwicklung 64 und Sekundärwicklung 66 zueinander die elektrische Spannung hochtransformiert wird.

Fig. 6 zeigt eine fünfte bevorzugte Ausführungsform einer erfindungsgemäßen Hochfrequenz-Plasmazündvorrichtung. Funktionsgleiche Teile sind mit gleichen Bezugszeichen bezeichnet, wie in Fig. 1 bis 5, so dass zu deren Erläuterung auf die obige Beschreibung der Fig. 1 bis 5 verwiesen wird. Der Aufbau der Hochfrequenz-Plasmazündvorrichtung entspricht im Wesentlichen demjenigen der vierten bevorzugten Ausführungsform von Fig. 5. Die Induktivität $L_1$ 10 ist als eine Induktivität mit Magnetkern, insbesondere Ringkernspule mit einem ringförmigen Kern aus einem magnetischen Werkstoff, um den ein elektrischer Leiter gewickelt ist, ausgebildet. Die Besonderheit dieser Bauform liegt darin, dass, wie in Fig. 5, für die Induktivität $L_1$ 10 ein Transformator vorgehen ist, wobei dieser als ein sogenannter "Spar-Trafo" ausgebildet ist, d.h. ohne galvanische Trennung zwischen Primär- und Sekundärkreis.

Insgesamt bietet die erfindungsgemäße Hochfrequenz-Plasmazündvorrichtung eine automatische Nachzündfähigkeit, falls das Plasma nach der Zündung und vor einem gewünschten Ende der Aufrechterhaltung unbeabsichtigt erlischt. Durch die innere Induktivität ($L_1$ 10 und/oder $L_2$ 28) erfolgt ggf. eine Plasmaausblasung aufgrund der entstehenden magnetischen Wechselfelder, wodurch eine schnellere und bessere Verteilung des Plasmas ausgehend von der Elektrode 40 in den Raum 44 hinein erzielt wird. Dies ist insbesondere bei der Zündung von Gemischen in einem Brennraum eines Arbeitszylinders einer Brennkraftmaschine von Vorteil.

Die Werte für die Induktivität $L_2$ 28 und die Kapazität $C_2$ 30 des Anpassnetzwerkes 26 werden bevorzugt gemäß der Formel

$$\frac{L_2}{C_2} = Z_{pl} Z_{gen}$$

bestimmt.

## Patentansprüche

1. Hochfrequenz-Plasmazündvorrichtung, insbesondere für eine Brennkraftmaschine, insbesondere zum Zünden eines Kraftstoff-Luft-Gemisches in einem Brennraum einer Brennkraftmaschine, mit einem Serienschwingkreis (11), welcher eine elektrische Induktivität (10) und eine elektrische Kapazität (12), die in Serie geschaltet sind, aufweist, sowie mit einem Hochfrequenz-Generator (20) mit einem ersten elektrischen Anschluss (22) und einem zweiten elektrischen Anschluss (24) zum resonanten Anregen des Serienschwingkreises (11), wobei eine erste elektrische Kontaktstelle (14) vorgesehen ist, an der ein Ende der Kapazität (12) und ein Ende der Induktivität (10) elektrisch miteinander verbunden ist, wobei die Kapazität (12) an einem von der ersten Kontaktstelle (14) abgewandten Ende eine zweite elektrische Kontaktstelle (16) aufweist, wobei die Induktivität (10) an einem von der ersten Kontaktstelle (14) abgewandten Ende eine dritte elektrische Kontaktstelle (18) aufweist, wobei eine elektrische Verbindungseinrichtung (26) vorgesehen ist, welche den ersten Anschluss (22) des Hochfrequenz-Generators (20) mit der dritten Kontaktstelle (18) und den zweiten Anschluss (24) des Hochfrequenz-Generators (20) mit der zweiten Kontaktstelle (16) elektrisch derart verbindet, dass ein Ausgangssignal des Hochfrequenz-Generators (20) über die zweite und dritte elektrische Kontaktstelle (16, 18) an dem Serienschwingkreis (11) anliegt, wobei eine erste Elektrode (32) derart angeordnet und ausgebildet ist, dass diese mit der ersten elektrischen Kontaktstelle (14) elektrisch verbunden ist, wobei eine zweite Elektrode (36) derart angeordnet und ausgebildet ist, dass diese mit der zweiten elektrischen Kontaktstelle (16) elektrisch verbunden ist, so dass zwischen einem freien, von der ersten elektrischen Kontaktstelle (14) abgewandten Ende (34) der ersten Elektrode (32) und einem freien, von der zweiten elektrischen Kontaktstelle (16) abgewandten Ende (38) der zweiten Elektrode (36) eine über der Kapazität (12) anliegende elektrische Spannung zum Zünden eines Plasmas zwischen diesen freien Enden (34, 38) der ersten und zweiten Elektrode (32, 36) zur Verfügung steht, **dadurch gekennzeichnet, dass** eine dritte Elektrode (40) derart angeordnet und ausgebildet ist, dass diese mit der dritten elektrischen Kontaktstelle (18) elektrisch verbunden ist und ein freies, von der dritten elektrischen Kontaktstelle (18) abgewandtes Ende (42) der dritten Elektrode (40) derart angeordnet ist, dass zwischen diesem freien Ende (42) der dritten Elektrode (40) und dem freien Ende (38) der zweiten Elektrode (36) eine über die zweite und dritte elektrische Kontaktstelle (16, 18) anliegende elektrische Spannung zum Aufrechterhalten des Plasmas nach dem Zünden zur Verfügung steht.

2. Hochfrequenz-Plasmazündvorrichtung nach Anspruch 1, **dadurch gekennzeichnet, dass** die elektrische Verbindungseinrichtung (26) ein Impedanz-Anpassungsnetzwerk derart aufweist, dass eine elektrische Impedanz zwischen dem ersten und zweiten Anschluss (22, 24) des Hochfrequenz-Generators (20) einerseits an eine elektrische Impedanz zwischen der zweiten und dritten elektrischen Kontaktstelle (16, 18) andererseits angepasst ist.

3. Hochfrequenz-Plasmazündvorrichtung nach Anspruch 2, **dadurch gekennzeichnet, dass** das Anpassnetzwerk (26) eine Induktivität (28), insbesondere eine Spule, aufweist, die die erste Anschlussstelle (22) des Hochfrequenz-Generators (20) mit der dritten elektrischen Kontaktstelle (18) elektrisch verbindet, sowie eine Kapazität (30), insbesondere einen Kondensator, aufweist, welcher die erste Anschlussstelle (22) des Hochfrequenz-Generators (20) mit der zweiten Anschlussstelle (24) des Hochfrequenz-Generators (20) elektrisch verbindet.

4. Hochfrequenz-Plasmazündvorrichtung nach mindestens einem der vorhergehenden Ansprüche, **dadurch gekennzeichnet, dass** die Kapazität (12) des Serienschwingkreises (11) durch mindestens einen Kondensator, mindestens einen Plattenkondensator, mindestens einen Kugelkondensator, mindestens einen Zylinderkondensator, mindestens ein Koaxialkabel, mindestens ein Leiterpaar, mindestens einen Durchführungskondensator und/oder durch zwei elektrische Leiter mit vorbestimmten Abstand, vorbestimmter Länge und Dielektrikum zwischen diesen ausgebildet ist.

5. Hochfrequenz-Plasmazündvorrichtung nach mindestens einem der vorhergehenden Ansprüche, **dadurch gekennzeichnet, dass** die Induktivität (10) des Serienschwingkreises (11) durch mindestens eine Spule, mindestens eine Ringspule, mindestens eine Zylinderspule, mindestens einen Koaxialleiter, mindestens eine Spule mit Magnetkern, mindestens einen Transformator und/oder mindestens einen elektrischen Leiter ausgebildet ist.

6. Hochfrequenz-Plasmazündvorrichtung nach mindestens einem der vorhergehenden Ansprüche, **dadurch gekennzeichnet, dass** die Hochfrequenz-Plasmazündvorrichtung ein Gehäuse (60) aufweist, welches mindestens einen Teil der zweiten Elektrode (36) ausbildet.

**Claims**

1. High-frequency plasma ignition device, in particular for an internal combustion engine and in particular for the ignition of a fuel/air mixture in a combustion chamber of an internal combustion engine, comprising a resonant series circuit (11) which has an inductive means (10) and a capacitive means (12) connected in series, and a high-frequency generator (20) having a first electrical terminal (22) and a second electrical terminal (24) for the resonant excitation of the resonant series circuit (11), a first electrical contact point (14) being provided at which one end of the capacitive means (12) and one end of the inductive means (10) are connected together electrically, the capacitive means (12) having a second electrical contact point (16) at an end which is remote from the first contact point (14) and the inductive means (10) having a third electrical contact point (18) at an end which is remote from the first contact point (14), an electrical connecting device (26) being provided which connects the first terminal (22) of the high-frequency generator (20) to the third contact point (18) electrically and the second terminal (24) of the high-frequency generator (20) to the second contact point (16) electrically in such a way that an output signal from the high-frequency generator (20) is applied to the resonant series circuit (11) via the second and third electrical contact points (16, 18), a first electrode (32) being arranged and configured in such a way that it is connected electrically to the first electrical contact point (14) and a second electrode (36) being arranged and configured in such a way that it is connected electrically to the second electrical contact point (16), with the result that there is available between a free end (34) of the first electrode (36), which free end (34) is remote from the first electrical contact point (14), and a free end (38) of the second electrode (36), which free end (38) is remote from the second electrical contact point (16), a voltage for igniting a plasma between said free ends (34, 38) of the first and second electrodes (32, 36), which voltage is applied across the capacitive means (12), **characterised in that** a third electrode (40) is arranged and configured in such a way that it is electrically connected to the third electrical contact point (18), and a free end (42) of the third electrode (40), which free end (42) is remote from the third electrical contact point (18), is arranged in such a way that a voltage for maintaining the plasma after ignition is available between said free end (42) of the third electrode (40) and the free end (38) of the second electrode (36), which voltage is applied via the second and third electrical contact points (16, 18).

2. High-frequency plasma ignition device according to claim 1, **characterised in that** the electrical connecting means (26) has an impedance matching network, in such a way that an impedance between the first and second terminals (22, 24) of the high-frequency generator (20) is on the one hand matched to an impedance between the second and third electrical contact points (16, 18) and on the other hand.

3. High-frequency plasma ignition device according to claim 2, **characterised in that** the matching network (26) has an inductive means (28), and in particular a coil, which connects the first terminal point (22) of the high-frequency generator (20) electrically to the third electrical contact point (18), and a capacitive means (30), and in particular a capacitor, which connects the first terminal point (22) of the high-frequency generator (20) electrically to the second terminal point (24) of the high-frequency generator (20).

4. High-frequency plasma ignition device according to at least one of the preceding claims, **characterised in that** the capacitive means (12) in the resonant series circuit (11) is formed by at least one capacitor, at least one parallel-plate capacitor, at least one spherical capacitor, at least one cylindrical capacitor, at least one co-axial cable, at least one pair of conductors, at least one feed-through capacitor, and/or by two electrical conductors of a predetermined length at a predetermined spacing with a dielectric between them.

5. High-frequency plasma ignition device according to at least one of the preceding claims, **characterised in that** the inductive means (10) in the resonant series circuit (11) is formed by at least one coil, at least one toroidal coil, at least one cylindrical coil, at least one co-axial conductor, at least one coil having a magnetic core, at least one transformer and/or at least one electrical conductor.

6. High-frequency plasma ignition device according to at least one of the preceding claims, **characterised in that** the high-frequency plasma ignition device has a housing (60) which forms at least part of the second electrode (36).

**Revendications**

1. Dispositif d'allumage à plasma de haute fréquence, en particulier pour un moteur à combustion interne, en particulier pour l'allumage d'un mélange carburant/air dans une chambre de combustion d'un moteur à combustion interne, comprenant un circuit oscillant série (11), qui comprend une inductance électrique (10) et une capacité électrique (12) qui sont branchées en série, ainsi qu'un générateur à haute fréquence (20) avec un premier raccordement électrique (22) et un second raccordement électrique (24) pour l'excitation résonante du circuit oscillant (11), dans lequel il est prévu un premier point de contact électrique (14), auquel une extrémité de la capacité (12) et une extrémité de l'inductance (10) sont connectées électriquement l'une à l'autre, dans lequel la capacité (12) comprend un deuxième point de contact électrique (18) à une extrémité détournée du premier point de contact (14), dans lequel il est prévu un dispositif de liaison électrique (26), qui relie électriquement le premier raccordement (22) du générateur à haute fréquence (20) avec le troisième point de contact (18) et le deuxième raccordement (24) du générateur à haute fréquence (20) avec le deuxième point de contact (16) sur le plan électrique de telle façon qu'un signal de sortie du générateur à haute fréquence (20) est appliqué au circuit oscillant série (11) via le deuxième point de contact électrique et le troisième point de contact électrique (16, 18), dans lequel une première électrode est agencée et réalisée de telle façon que celle-ci est reliée électriquement avec le premier point de contact électrique (14), dans lequel une deuxième électrode (36) est agencée et réalisée de telle façon que celle-ci est reliée électriquement avec le deuxième point de contact électrique (16), de telle façon qu'entre une extrémité libre (34), détournée du premier point de contact électrique (14), de la première électrode (32) et une extrémité libre (38), détournée du deuxième point de contact électrique (16), de la deuxième électrode (36), une tension électrique, appliquée via la capacité (12) est disponible pour allumer un plasma entre ces extrémités libres (34, 38) de la première et de la deuxième électrode (32, 36), **caractérisé en ce que**

une troisième électrode (40) est agencée et réalisée de telle façon que celle-ci est reliée électriquement avec le troisième point de contact électrique (18), et une extrémité libre (42), détournée du troisième point de contact électrique (18), de la troisième électrode (40) est agencée de telle façon qu'entre cette extrémité libre (42) de la troisième électrode (40) et l'extrémité libre (38) de la troisième électrode (36), une tension électrique, appliquée via le deuxième et le troisième point de contact électrique (16, 18) est disponible pour maintenir le plasma après l'allumage.

2. Dispositif d'allumage à plasma de haute fréquence selon la revendication 1, **caractérisé en ce que** le dispositif de liaison électrique (26) comprend un réseau d'adaptation d'impédance de telle façon qu'une impédance électrique entre le premier et le deuxième raccordement (22, 24) du générateur à haute fréquence (20) d'une part est adaptée à une impédance électrique entre le deuxième et le troisième point de contact électrique (16, 18) d'autre part.

3. Dispositif d'allumage à plasma de haute fréquence selon la revendication 2, **caractérisé en ce que** le réseau d'adaptation (26) comprend une inductance (28), en particulier une bobine, qui relie électriquement le premier point de raccordement (22) du générateur à haute fréquence (20) avec le troisième point de contact électrique (18), ainsi qu'une capacité (30), en particulier un condensateur, qui relie électriquement le premier point de raccordement (22) du générateur à haute fréquence (20) avec le deuxième point de raccordement (24) du générateur à haute fréquence (20).

4. Dispositif d'allumage à plasma de haute fréquence selon l'une au moins des revendications précédentes, **caractérisé en ce que** la capacité (12) du circuit oscillant série (11) est formée par au moins un condensateur, au moins un condensateur à plaques, au moins un condensateur à sphère, au moins un condensateur à cylindre, au moins un câble coaxial, au moins une paire de conducteurs, au moins un condensateur de traversée et/ou par deux conducteurs électriques avec un écartement prédéterminé, une longueur prédéterminée et un diélectrique entre ceux-ci.

5. Dispositif d'allumage à plasma de haute fréquence selon l'une au moins des revendications précédentes, **caractérisé en ce que** l'inductance (10) du circuit oscillant série (11) est réalisée par au moins une bobine, au moins une bobine annulaire, au moins une bobine cylindrique, au moins un câble coaxial, au moins une bobine avec le noyau magnétique, au moins un transformateur et/ou au moins un conducteur électrique.

6. Dispositif d'allumage à plasma de haute fréquence selon l'une au moins des revendications précédentes, **caractérisé en ce que** le dispositif d'allumage à plasma de haute fréquence comprend un boîtier (60), qui forme au moins une partie de la deuxième électrode (36).

# Fig. 1

Fig. 4

Fig. 3

Fig. 2

Fig. 5

Fig. 6

# Fig. 7

**IN DER BESCHREIBUNG AUFGEFÜHRTE DOKUMENTE**

**In der Beschreibung aufgeführte Patentdokumente**

- DE 102004058925 A1
- DE 102005036968